# FASCICULE DE BREVET EUROPEEN

(11) **EP 2 595 795 B1**
(45) Date de publication et mention de la délivrance du brevet: **27.06.2018**
(21) Numéro de dépôt: 11752267.2
(22) Date de dépôt: 21.07.2011
(51) Int. Cl.: B29C 70/08, B29C 70/20, B32B 5/28, B32B 5/02, B29K 263/00, B32B 5/08, B32B 5/12, B32B 5/26, B29K 307/04, B32B 3/14, B32B 3/18

(54) **NOUVEAU MATERIAU INTERMEDIAIRE DE RENFORT CONSTITUE D'UN ENSEMBLE DE FILS VOILES ESPACES, PROCEDE DE FABRICATION A PARTIR D'UN TEL MATERIAU ET PIECES COMPOSITES OBTENUES PAR UN TEL PROCEDE**
NEUES ZWISCHENVERSTÄRKUNGSMATERIAL MIT EINEM ARRAY AUS IN ABSTÄNDEN ANGEORDNETEN GARNEN/NETZEN, VERFAHREN ZUR VERWENDUNG DES MATERIALS UND DURCH DAS VERFAHREN ERHALTENES FASERVERBUNDTEIL
NOVEL INTERMEDIATE REINFORCING MATERIAL CONSISTING OF AN ARRAY OF SPACED-APART YARNS/WEBS, PROCESS USING THE MATERIAL AND COMPOSITE PART OBTAINED BY THE PROCESS

(30) Priorité: 22.07.2010 FR 1056020
(43) Date de publication de la demande: 29.05.2013
(73) Titulaire: Hexcel Reinforcements, 01120 Dagneux (FR)
(72) Inventeur: BERAUD, Jean-marc, F-38140 Rives (france) (FR); DUCARRE, Jacques, F- 38630 CORBELIN (FR); THIEL, Jean-Benoît, F-38110 La Chapelle De La Tour - France (FR)
(74) Mandataire: Sarlin, Laure V.
(86) Numéro de dépôt international: PCT/FR2011/051764
(87) Numéro de publication internationale: WO 2012/010805

(56) Documents cités:
- WO-A1-2010/046609
- US-A1- 2003 224 141

## Description

La présente invention concerne le domaine technique des matériaux de renfort, adaptés à la constitution de pièces composites. Plus précisément, l'invention concerne un nouveau matériau intermédiaire constitué d'un ensemble de rubans de fibres unidirectionnelles pour la réalisation de pièces composites, par injection ou infusion ultérieure de résine thermodurcissable, thermoplastique, ou d'un mélange des deux, un procédé de fabrication de pièces composites à partir d'un tel matériau intermédiaire, et les pièces composites obtenues.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais « Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais Resin Transfer Moulding), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Or, les propriétés mécaniques des pièces sont principalement liées à un paramètre qui est le taux volumique de fibres (TVF).

Dans ces secteurs, un grand nombre de préformes sont réalisées à base de matériau de renfort, principalement en fibres de carbone, notamment du type unidirectionnel. Il est possible de calculer de manière théorique le taux volumique maximal de fibres contenues dans une nappe unidirectionnelle en supposant deux types d'arrangements : hexagonal ou carré. En supposant respectivement un arrangement de type hexagonal et un arrangement de type carré, le TVF maximum obtenu est respectivement de 90,7 % et de 78,5 % (An Introduction to Composite Materials, D. Hull, T.W. Clyne, Second Edition, Cambridge Solid State Science Series, 1996). En revanche dans la réalité, il semble difficile d'obtenir des fractions volumiques de fibres supérieures à 70% pour des pièces composites. Dans la pratique, il est communément admis, par l'homme de métier, qu'un taux volumique de fibres (TVF) d'environ 60 % est un standard pour la réalisation de pièces composites satisfaisantes et ce, avec une bonne reproductibilité (S. T. Peters, « Introduction, composite basics and road map », in Handbook of Composites, Chapman & Hall, 1998, p. 1- 20 et en particulier p. 8).

La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide, par exemple d'une viscosité de l'ordre de 50 à 200mPa.s. à température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à un voile de fibres thermoplastiques. De telles solutions sont notamment décrites dans les demandes de brevet ou les brevets EP1125728, US 628016, WO 2007/015706, WO 2006/121961 et US 6,503,856. L'ajout de ce voile permet d'améliorer les propriétés mécaniques au test de compression après impact (CAI), test utilisé de manière courante pour caractériser la résistance des structures à l'impact.

La demanderesse a également proposé dans les demandes de brevet antérieures WO 2010/046609 et WO 2010/061114, des matériaux intermédiaires particuliers comportant une nappe de fibres unidirectionnelles, en particulier de carbone, associée par collage, sur chacune de ses faces à un voile de fibres thermoplastiques (également nommé non-tissé), ainsi que leur procédé d'élaboration. Les nappes unidirectionnelles assurant une couverture totale, pour certaines applications notamment pour la réalisation de pièces d'épaisseur importante, une des limitations de ce type de matériau intermédiaire est sa faible perméabilité transverse à la résine qui va être injectée ou infusée pour la constitution de la pièce finale. Dans ce contexte, une solution a été proposée dans la demande de brevet WO 2010/046609 consistant en la réalisation de trous s'étendant dans le matériau, lui permettant d'avoir un facteur d'ouverture donné. Cette solution est en pratique utilisable sur des nappes de largeur supérieure à environ 20mm, et préférentiellement supérieure à 50mm mais est plus difficilement réalisable dans le cas de fils/nappe de largeurs inférieures. Or, des largeurs de 3,17mm ou 6,35mm sont, par exemple, utilisées en dépose automatique sur des machines existantes et présentent donc un intérêt tout particulier.

La présente invention a pour objectif d'éliminer et/ou limiter les problèmes ci-dessus et/ou d'apporter des améliorations en général. Aussi, un des objectifs de la présente invention est de proposer un nouveau produit intermédiaire, adapté à la réalisation de pièces composites à base de résine thermodurcissable ou thermoplastique, et notamment par injection ou infusion de résine, qui présente une perméabilité satisfaisante et autorise des temps de diffusion de la résine assez faibles, même dans le cas de conception de pièces de forte épaisseur, par exemple au-delà de 20mm.

Un autre objectif de l'invention est de remplir ce cahier des charges, tout en proposant un produit intermédiaire qui soit facile à fabriquer et adapté à des procédés automatisés.

Un autre objectif de l'invention est également de proposer un produit intermédiaire qui puisse être directement confectionné en forme sur un moule de forme adaptée à la pièce composite finale souhaitée et donc se présenter sous la forme d'une préforme.

Dans ce contexte, l'invention concerne les matériaux intermédiaires, procédé et pièces composites tels que définis dans les revendications.

En particulier, le matériau intermédiaire selon l'invention comprend, voire est constitué exclusivement, d'un ensemble de rubans individualisés, chaque ruban étant composé d'une nappe non ajourée de fibres de renfort unidirectionnelles associée sur chacune de ses faces à un voile de fibres thermoplastiques, la liaison entre la nappe de fibres unidirectionnelles et les voiles de fibres thermoplastiques étant assurée par collage, et notamment par fusion au moins partielle des fibres thermoplastiques, caractérisé en ce que les rubans sont disposés les uns à côtés des autres en couches successives, et notamment en au moins quatre couches, de manière à ce que les rubans de deux couches successives se superposent avec ou sans croisement mais sans entrelacement, la liaison entre un ruban et le ou les rubans avec lequel il est superposé étant assurée par collage, et notamment par fusion au moins partielle des fibres thermoplastiques, et en ce que dans chaque couche, les rubans sont disposés sensiblement parallèlement les uns aux autres au moins sur la majeure partie de leur longueur, tout en étant indépendants et espacés les uns des autres et en ce que les rubans d'au moins deux couches s'étendent selon deux directions différentes.

Diverses autres caractéristiques du matériau selon l'invention sont détaillées dans les revendications.

Le matériau selon l'invention est destiné à la réalisation de pièces composites par procédé direct. Aussi, la masse de non-tissés, au sein de chaque ruban voilé, représente de 0,1 à 10 % et, de préférence, de 3 à 10 % de la masse totale de chaque ruban.

Le procédé de fabrication d'un matériau intermédiaire de renfort ou d'une préforme conforme à l'invention peut comprendre les étapes suivantes :
a) disposer d'au moins un ruban individualisé, composé d'une nappe non ajourée de fibres de renfort unidirectionnelles associée sur chacune de ses faces à un voile de fibres thermoplastiques, la liaison entre la nappe de fibres unidirectionnelles et les voiles étant assurée par fusion au moins partielle des fibres thermoplastiques,
b) disposer de tels rubans les uns à côtés des autres et en couches successives, notamment en au moins quatre couches, de manière à ce que les rubans de deux couches successives se superposent avec ou sans croisement mais sans entrelacement, et de sorte que, dans chaque couche, les rubans soient disposés sensiblement parallèlement les uns aux autres sur au moins la majeure partie de leur longueur, tout en étant indépendants et espacés les uns des autres, et que les rubans d'au moins deux couches s'étendent selon deux directions différentes,
c) assurer la liaison entre un ruban et le ou les rubans avec lequel il est superposé par fusion au moins partielle des fibres thermoplastiques.

L'invention a également pour objet un procédé de fabrication d'une pièce composite caractérisé en ce qu'il comporte les étapes suivantes :
a) disposer d'au moins un matériau intermédiaire de renfort ou d'une préforme conforme à l'invention,
b) éventuellement empiler différents matériaux selon l'une des revendications précédentes et éventuellement les solidariser sous la forme d'une préforme,
c) ajouter, par infusion ou injection, une résine thermodurcissable et/ou thermoplastique,
d) consolider la pièce souhaitée par une étape de polymérisation/réticulation suivant un cycle défini en température et sous pression, suivi d'un refroidissement.

Selon un mode de mise en oeuvre particulier du procédé selon l'invention, la résine thermodurcissable est ajoutée par infusion sous une pression inférieure à la pression atmosphérique, notamment à une pression inférieure à 1 bar et, par exemple, comprise entre 0,1 et 1 bar.

Selon un autre de ses aspects, l'invention concerne les pièces composites susceptibles d'être obtenues selon un tel procédé, qui présentent notamment un taux volumique de fibres (TVF) de 50 à 63%, de préférence de 53 à 60%.

L'invention peut être utilisée pour fournir un matériau de moulage comprenant une multitude de plis, chaque pli comprenant des rubans de renfort orientés et espacés, l'orientation des rubans dans un pli différant de l'orientation des rubans dans le pli adjacent, chaque ruban comprenant un matériau de renfort fibreux.

Le matériau de moulage peut également comprendre un matériau de liaison pour maintenir l'orientation des rubans. Ce matériau de liaison peut comprendre un matériau fibreux thermoplastique.

Diverses autres caractéristiques ressortent de la description faite ci-dessous en référence aux dessins annexés.
Les **Figures 1, 2A** et **2B** montrent, de façon schématique, différentes constructions que peut présenter un matériau intermédiaire selon l'invention.
La **Figure 2A** est une vue en perspective partielle d'une couche de rubans dans une zone de bossage et la **Figure 2B** est une vue partielle correspondante de dessus.
Les **Figures 3A** et **3B** sont des vues schématiques en coupe montrant le positionnement que peuvent prendre, dans un matériau intermédiaire conforme à l'invention, des rubans de couches successives orientées dans la même direction.
Les **Figure 4** et **5** sont, respectivement, une représentation schématique, en perspective, partiellement arrachée, et en coupe, d'un ruban utilisé dans le cadre de l'invention, dans lequel une nappe unidirectionnelle est associée à deux non tissés.
La **Figure 6** est une vue schématique d'un dispositif pouvant être utilisé pour la réalisation de pièces composites.
La **Figure 7** montre l'évolution du taux de remplissage en résine lorsque les configurations illustrées **Figures 3A** et **3B** sont utilisées par le procédé infusion sous vide.
La **Figure 8** représente les évolutions de perméabilité transverse en fonction du TVF obtenus pour des matériaux conformes à l'invention et des matériaux comparatifs.

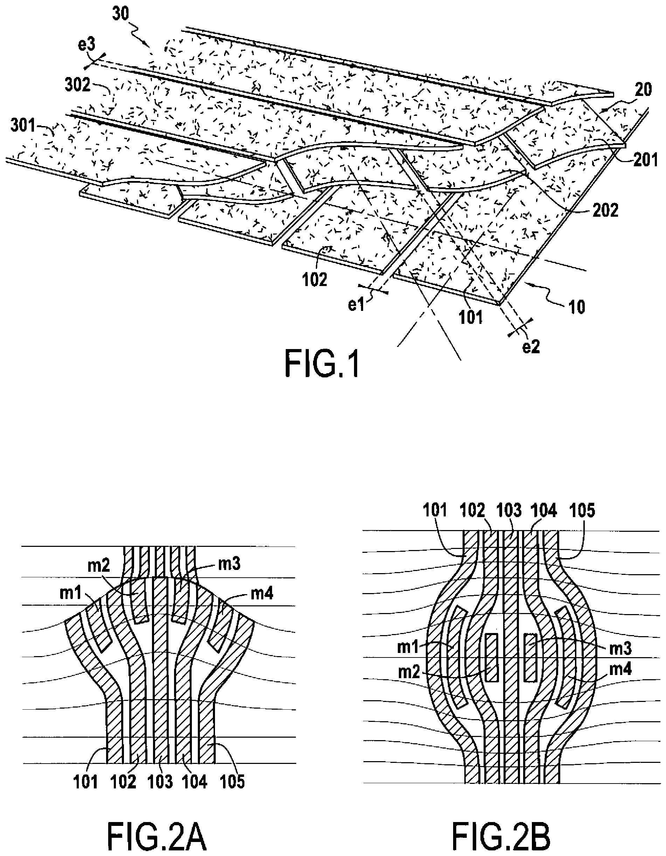

L'invention propose des matériaux réalisés par dépôt de rubans, dont certains au moins, et de préférence tous, sont des rubans dits voilés. Dans le cadre de l'invention, les fils ou filaments unidirectionnels constitutifs des rubans sont associés sur chacune de leur face à des non-tissés (également nommés voiles), avant leur utilisation pour constituer le matériau intermédiaire selon l'invention. Aussi, dans le matériau selon l'invention, chaque ruban voilé est constitué d'une nappe de fibres de renfort unidirectionnelles associée à deux non-tissés sur toute sa longueur. Comme présenté **Figure 1****,** dans le cadre de l'invention, différents rubans **100, 101,** ... **200, 201,** ... **300, 301,** ... sont disposés à plat côte à côte et en couches successives **10, 20, 30** ..., tout en étant espacés les uns des autres dans chaque couche d'une distance **e1, e2, e3**.... La première série **10** (également nommée couche ou pli) de rubans est déposée sur une surface plane comme illustré **Figure 1** ou en forme comme illustré **Figures 2A** et **2B****.** Une deuxième série **20** de rubans côte à côte et espacés est alors déposée à plat ou en forme, par exemple avec une orientation différente de celle de la première série **10.** On procède ainsi à un empilement de différentes séries de rubans parallèles entre eux dans chaque série, et de préférence d'au moins quatre séries, en fonction de l'épaisseur et des orientations souhaitées, par analogie avec un matériau unidirectionnel classique. Toutes les couches de rubans peuvent avoir des directions différentes ou seulement certaines d'entre elles, les autres pouvant avoir des directions identiques. Les orientations privilégiées sont le plus souvent, orientées dans les directions faisant un angle de 0°, + 45° ou - 45°(correspondant également à +135°), et +90° avec l'axe principal de la pièce à réaliser. L'axe principal de la pièce est généralement le plus grand axe de la pièce et le 0° se confond avec cet axe. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°. A titre d'exemples d'empilement symétrique, on peut citer 0°/90°/0°, ou 45°/135°/45°. Dans chaque série, les rubans s'étendent sensiblement parallèlement les uns aux autres, sauf par exemple dans des zones de bossage **II,** où, des morceaux de rubans supplémentaires **m1, m2...** peuvent être positionnés entre des bandes **100, 101** ..., créant des zones de non parallélisme, comme illustré **Figures 2A** et **2B****.** Ces morceaux de rubans sont introduits afin de respecter la direction privilégiée des fils, mais compenser les différences de longueur dues au bossage L'insertion de segments de ruban n'est effectuée que dans des cas extrêmes. Lorsque cela est possible, on réalisera, dans des zones de courbure, un espacement entre deux bandes ou série de bandes légèrement différent comparativement à l'espace inter-bandes présents sur les zones planes de la même pièce. Par conséquent, dans chaque couche ou pli, les rubans sont positionnés parallèlement les uns aux autres sur toute leur longueur, à l'exception des zones de courbure ou de bossage où un non parallélisme peut être introduit notamment du fait de la différence de distance que doivent parcourir deux rubans voisins.

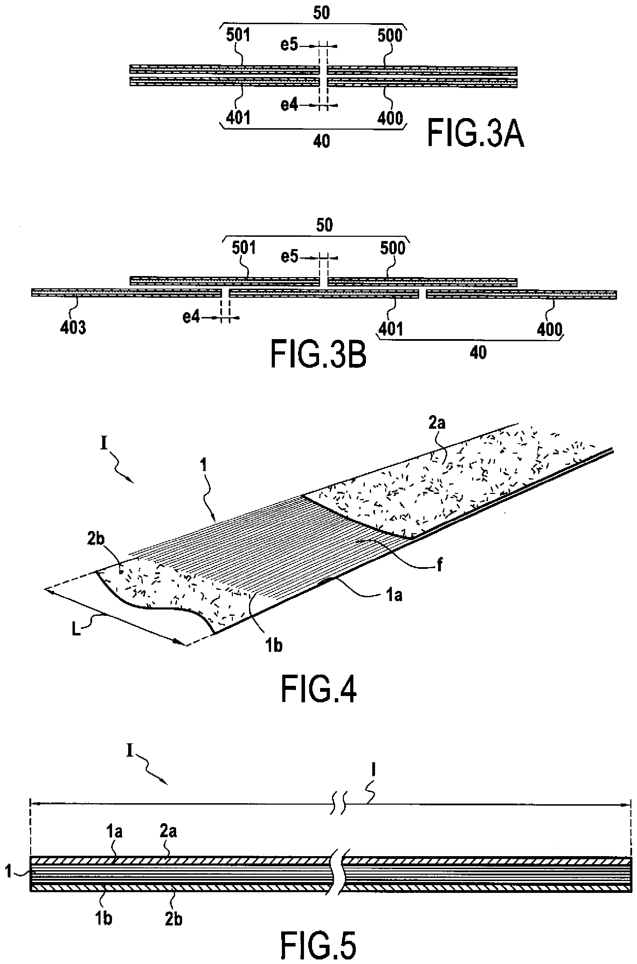

La présence des espacements entre deux rubans voisins au sein d'une même série permet d'accroitre les perméabilités planes (c'est-à-dire parallèlement aux nappes de fibres) et transverses (c'est-à-dire transversalement aux nappes de fils) du matériau intermédiaire selon l'invention, par rapport à un matériau où les nappes unidirectionnelles assureraient une couverture totale. Notamment, dans le cadre de l'invention, une perméabilité transverse en régime saturé de 10⁻¹⁴m² et 2.10⁻¹⁴m² peut être obtenue. Pour qu'une telle perméabilité soit constatée, il faut néanmoins que les rubans de deux couches successives soient disposés de manière à ce qu'il n'y ait pas total recouvrement des espaces entre rubans d'une des couches par les rubans de l'autre couche. C'est le cas notamment :
- soit lorsqu'il n'y a aucune couche successive dans lesquelles les rubans s'étendent dans des directions identiques,
- soit lorsqu'il y a des couches successives **40** et **50** dans lesquelles les rubans sont orientés dans des directions identiques, mais qu'il y a parfaite ou quasi-parfaite superposition des rubans des couches dans lesquelles les rubans sont orientés dans des directions identiques, comme illustré **Figure 3A****.** En effet, les rubans **400** et **401** de la couche **40** se superposent avec les rubans **500** et **501** de la couche **50.** Les bandes de deux couches successives d'orientation identique ne doivent pas être décalées les unes par rapport aux autres, selon un décalage qui entrainerait un total recouvrement des espaces inter-rubans par les rubans de la couche inférieure ou supérieure.

En effet, dans le cas illustré **Figure 3B** où les bandes de deux couches successives sont décalées d'une demi-largeur de bande de sorte que les espaces de l'une ou l'autre des couches coïncident avec les bandes de l'autre couche, la perméabilité n'est pas améliorée. Néanmoins, un tel matériau présente des facilités de conception, notamment pour la réalisation de préformes sur des moules en forme, le dépôt de bandes de faible largeur étant plus aisé que le dépôt d'un matériau en feuille de plus grande largeur.

De façon avantageuse, chaque couche de rubans présente un facteur d'ouverture appartenant à la gamme 0,5 à 9%, de préférence 3 à 6%. Ce facteur d'ouverture est le facteur d'ouverture de chaque couche prise individuellement, en faisant abstraction des autres couches. Le facteur d'ouverture est, par exemple, déterminé selon la méthode décrite dans la demande de brevet WO 2010/046609 à laquelle on pourra se référer pour plus de détails. Afin de réaliser cette mesure sur un seul pli, la dépose pourra être effectuée sur une bâche à vide transparente, le collage s'effectuant de la même manière qu'avec un pli précédent constitué de bande de même matériau. De tels facteurs d'ouverture permettent d'obtenir des perméabilités intéressantes comparables ou supérieures à celles obtenues avec les multiaxiaux cousus traditionnels. Par exemple, dans chaque série (également nommée couche) de rubans parallèles, le rapport largeur de ruban/espacement entre deux rubans voisins appartient à la gamme allant de 7 à 150, préférentiellement à la gamme allant de 15 à 40. Le plus souvent, dans chaque couche, voire dans toutes les couches de rubans, tous les rubans auront une largeur sensiblement identique et les espaces (**e1**, **e2**, **e3**, **e4**, **e5**... comme représenté sur Les Figures **1****,** **3A** et **3B****)** entre deux rubans voisins seront également sensiblement identiques. Par ailleurs, il est préférable que l'espacement entre deux rubans voisins au sein d'une couche dans les zones de parallélisme soit au plus de 0,4mm, de manière à éviter la création d'amas de résine lors de la conception de la pièce finale, qui seraient notamment des sources de microfissuration après cycle hygrothermique. Cette valeur d'espacement correspond à une moyenne sur les zones de parallélisme. Cet espacement appartient, par exemple, à la gamme allant de 0,1 à 0,4 mm, de préférence à la gamme allant de 0,2 à 0,4 mm. Néanmoins, il est possible que dans les zones de courbure ou de bossage où les rubans sont localement non parallèles (nommées zones de non parallélisme), l'espace inter-rubans soit légèrement plus élevé.

Les rubans d'une même série ou couche sont individuels et indépendants les uns des autres, par opposition notamment à des rubans de fibres unidirectionnelles qui seraient liés entre eux par un seul et même voile. Les rubans d'une même série sont uniquement liés par la présence de rubans d'autres couches venant les croiser et assurant la liaison de l'ensemble. La liaison de l'ensemble est assurée par la liaison entre un ruban et le ou les rubans avec lequel il est superposé, cette liaison étant réalisée par collage. Pour assurer la cohésion de l'ensemble, au moins deux couches de rubans ont des orientations différentes. Cette liaison est le plus souvent réalisée par fusion au moins partielle des fibres thermoplastiques constituant les voiles, suivie d'un refroidissement. Cette fusion peut être assurée au fur et à mesure de la dépose de chaque ruban voilé, par analogie avec le procédé décrit dans la demande de brevet EP 1 469 113 au nom de la demanderesse, ou en une étape de thermo-compression sur un ou plusieurs plis complets ou sur une partie de leur surface seulement, par exemple sur les parties extérieures de la pièces à réaliser, par exemple leur pourtour, et ceci sur un support de forme plane ou plus complexe. La fusion peut aussi être assurée à plat sur une partie de la forme à réaliser, cette fusion entre plis étant particulièrement faite sur les zones ne nécessitant pas de mouvement entre plis lors de la thermo-compression, le reste des plis restants libres de tout mouvement en autorisant ainsi la réalisation d'ensemble de plis en forme par mouvement des fils de plis restés non solidarisés aux plis inférieurs. Il n'est pas non plus exclu que les voiles soient recouverts d'un autre liant polymérique, par exemple une poudre thermodurcissable, du type époxy notamment, qui assurerait ou contribuerait à la liaison. De préférence, aucune liaison par couture et/ou tricotage entre les différentes couches de rubans n'est présente.

Un autre avantage du matériau selon l'invention réalisé à partir de bandes individuelles et indépendantes constituées de fibres de renfort unidirectionnelles associées sur chacune de leurs faces à un non-tissé de fibres thermoplastiques, se situe, notamment, au niveau de la déformabilité, et de la facilité de conception de préforme sur des moules de forme complexe. En effet, le fait d'utiliser directement des rubans porteurs de non-tissés qui vont apporter les propriétés mécaniques souhaitées à la pièce finale, offre de nombreuses possibilités de conception. Par exemple, le matériau selon l'invention peut directement être obtenu par dépôt de ruban voilé sur un support plat ou en forme selon la forme de la pièce désirée. Le matériau selon l'invention peut directement être réalisé en forme, la forme étant maintenue grâce à la fusion/refroidissement des fibres thermoplastiques, soit en feuille plane qui pourra alors être positionnée et drappée, après léger chauffage, sur un moule de forme complexe, lors de la conception de la pièce finale.

Dans le cadre de l'invention, par ruban ou bande, on entend un matériau en feuille qui présente une longueur, bien supérieure à sa largeur. De tels rubans peuvent notamment présenter des largeurs de 3 à 25 mm. Les rubans voilés peuvent être réalisés à partir de un ou plusieurs fils, un fil étant constitué d'un ensemble de filaments. Des rubans voilés de plus faible largeur peuvent même être obtenus dans le cas où un fil très fin de 1K ou 3K est utilisé. Comme le montre la **Figure 4****,** les rubans voilés **I** utilisés dans le cadre de l'invention présentent une longueur l et une largeur **L**. Ces rubans voilés sont constitués d'un ensemble de filaments **f** (cas d'un seul fil **1**) ou d'un ensemble de fils **1** (chacun constitué d'un ensemble de filaments) qui s'étendent parallèlement à la largeur du ruban. Un ruban voilé a une forme générale rectangulaire et est associé sur chacune de ses grandes faces **1a** et **1b** à un non-tissé (respectivement **2a** et **2b**), comme le montre la **Figure 5****.**

Par non-tissé, qui peut également être nommé « voile », on entend classiquement un ensemble de fibres continues ou courtes disposées aléatoirement. Ces non tissés ou voiles pourront par exemple être produits par les procédés « Meltblow », « Spunlaid » ou « Electrospinning », bien connus de l'homme du métier. En particulier, les fibres constitutives du non-tissé peuvent présenter des diamètres moyens compris dans la gamme allant de 0,5 et 70 µm, et préférentiellement de 0,5 et 30 µm. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. L'utilisation de non-tissés qui présentent une couverture aléatoire et isotropique permet de conférer à chaque ruban voilé une cohésion uniforme et dans toutes les directions, contrairement à la mise en oeuvre de fils de liaison espacés, par exemple. Pour chaque ruban voilé, la liaison entre les non-tissés et la nappe unidirectionnelle a été préalablement assurée, par chauffage, en utilisant le caractère collant à chaud des non-tissés thermoplastiques, suivi d'un refroidissement. A titre d'exemple, les fibres constitutives des non-tissés sont, avantageusement, constituées d'un matériau thermoplastique, notamment choisi parmi : les Polyamides (PA, par exemple PA6, PA12, PA11, PA6,6, PA 6,10, PA 6,12, ...), Copolyamides (CoPA), les Polyamides - block ether ou ester (par exemple, PEBAX, PEBA), polyphtalamide (PPA), les Polyesters (par exemple, les Polyéthylène téréphtalate -PET-, Polybutylène téréphtalate - PBT-...), les Copolyesters (CoPE), les polyuréthanes thermoplastiques (TPU), les polyacétales (POM), les Polyoléfines en C2-C8 (par exemple, les polypropylènes - PP, les polyéthylènes haute densité - HDPE, les polyéthylènes basse densité - LDPE, les polyéthylènes basse densité linéaire -LLDPE...) et/ou les copolymères de ces derniers,, Polyéthersulfones (PES), les polysulfones (PSU), les polyphénylènes sulfones (PPSU), PolyétherétherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phénoxys, les copolymères à blocs tels que les copolymères Styrène-Butadiene-Méthylméthacrylate (SBM), les copolymères Méthylméthacrylate-Acrylate de Butyl-Méthylméthacrylate (MAM) et leurs mélanges. Les non-tissés peuvent être constitués de fibres de même nature, mais également d'un mélange de fibres constituées de ces matériaux thermoplastiques. La matière est bien entendue adaptée aux différents types de systèmes thermodurcissables ou thermoplastiques utilisés pour la constitution de la matrice, lors de la réalisation ultérieure des pièces composites.

Chaque ruban voilé utilisé pour la constitution du matériau intermédiaire selon l'invention présente, sur chacune de ses grandes faces, un non-tissé de fibres thermoplastiques qui lui assure sa cohésion. Notamment, à titre de non-tissé de fibres thermoplastiques, on peut utiliser des non-tissés commercialisés par exemple par les sociétés Protechnic (66, rue des Fabriques, 68702 - CERNAY Cedex - France) ou Spunfab Ltd. / Keuchel Associates, Inc. (175 Muffin Lane Cuyahoga Falls, OH 44223, USA).

Dans le cadre de l'invention, par « nappe unidirectionnelle de fibres de renfort », on entend une nappe constituée exclusivement ou quasi-exclusivement de fibres de renfort déposées parallèlement les unes aux autres. En particulier, selon un mode de réalisation particulier de l'invention, la nappe unidirectionnelle ne comporte aucun fil de trame venant entrelacer les fibres de renfort, de manière à éviter toute ondulation. En particulier, le matériau intermédiaire selon l'invention ne comporte ni tissage, ni couture, ni tricotage. Dans la nappe unidirectionnelle, les fils de carbone sont, de préférence, non associés à un liant polymérique et donc qualifiés de secs, c'est-à-dire qu'ils ne sont ni imprégnés, ni enduits, ni associés à un quelconque liant polymérique avant leur association aux voiles thermoplastiques. Les fibres de carbone sont, néanmoins, le plus souvent caractérisées par un taux massique d'ensimage standard pouvant représenter au plus 2% de leur masse.

Les nappes unidirectionnelles peuvent être constituées de un ou plusieurs fils de renfort. A titre d'exemple, les fils de renfort peuvent être en un matériau choisi parmi les matériaux suivants : carbone, verre, aramide, silice, basalte, céramique et leurs mélanges, ou tout autre matériau utilisé dans le domaine des matériaux composites, les fibres pouvant être naturelles ou synthétiques. Les fibres de carbone sont néanmoins préférées.

Au sein de chaque ruban, les filaments ou fibres de renfort sont disposés de manière à assurer une couverture quasi-totale, et de préférence totale, sur toute la surface du ruban. En particulier, lorsque le ruban voilé est constitué d'une nappe unidirectionnelle de plusieurs fils, ceux-ci seront disposés bord à bord, avec un minimum, voir aucun manquement de matière (« gap » en anglais) ou chevauchement (« overlap » en anglais). La nappe unidirectionnelle et donc le ruban voilé utilisé peut donc être qualifié de non-ajouré.

Un fil est en général constitué d'un ensemble de filaments et comporte, en général, dans le cas des fils de carbone, de 1 000 à 80 000 filaments, avantageusement de 12 000 à 24 000 filaments. De façon, particulièrement préférée, dans le cadre de l'invention, des fils de carbone de 1 à 24 K, par exemple, de 3K, 6K, 12K ou 24K, et préférentiellement de 12 et 24K, sont utilisés. Les fibres constitutives sont de préférence continues. Les fils présents au sein des rubans voilés présentent une section droite transversale sensiblement parallélépipédique ou elliptique et sont qualifiés de fils plats. Ces fils présentent une certaine largeur et épaisseur. A titre d'exemple, un fil plat de carbone de 3K et d'un titre de 200 tex présente généralement une largeur de 1 à 3 mm, un fil plat de carbone de 12K et d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm et un fil plat de carbone de 24K et d'un titre de 1040 tex, une largeur de 5 à 10 mm. Un fil plat de carbone de 3 000 à 24 000 filaments présentera donc le plus souvent une largeur de 1 à 12 mm. Pour certains modes de réalisation, les fils de carbone présents au sein des rubans voilés, présentent un titre compris entre 60 et 3800 Tex, et préférentiellement entre 400 et 900 tex. Avant l'association du ou des fils aux voiles pour réaliser les rubans, il est possible d'étaler ou non les fils utilisés classiquement disponibles dans le commerce. A titre d'exemple, l'épaisseur de la nappe unidirectionnelle de carbone, au sein d'un ruban, peut être de 90 à 270 µm environ. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001).

Les rubans voilés tels que précédemment décrits, et dont certains exemples plus précis vont être donnés, par la suite dans la description et les exemples, sont utilisés, dans le cadre de l'invention pour fabriquer des matériaux intermédiaires, destinés à être associés à une matrice de résine pour la réalisation ultérieure de pièces composites, pour l'aéronautique notamment. La matrice de résine peut être de nature thermoplastique ou de préférence thermodurcissable ou constituée d'un mélange de résines thermodurcissable et thermoplastique. Dans les matériaux intermédiaires selon l'invention, ces rubans voilés sont disposés les uns à côté des autres, de manière à laisser un espacement entre deux rubans voisins. Chaque ensemble de rubans déposés sensiblement parallèlement les uns aux autres est nommée couche. Pour constituer le matériau intermédiaire, différentes couches, et le plus souvent au moins quatre couches, sont superposées et éventuellement entrecroisées sans entrelacement. Les matériaux intermédiaires selon l'invention sont, de préférence, constitués exclusivement de rubans voilés composés d'une série de fils ou filaments de renfort qui s'étendent selon une direction parallèle à la longueur du ruban pour former une nappe unidirectionnelle qui est associée sur chacune de ses faces à un non-tissé en fibres thermoplastiques, ces deux non-tissés assurant la cohésion dudit ruban voilé grâce à leur caractère thermoplastique. En particulier, les matériaux intermédiaires selon l'invention sont exclusivement constitués d'un ensemble de rubans voilés tels que plus précisément décrits dans la présente demande de brevet. Il n'est cependant pas exclu que dans les matériaux intermédiaires selon l'invention, ces rubans voilés soient combinés à d'autres rubans tels que des fils simples ou autres. En effet, ces rubans voilés peuvent, par exemple, n'être utilisés que dans certaines orientations d'un matériau multiaxial, les fils d'autres orientations étant classiques et non voilés, voire étant constitué exclusivement ou non d'autre types de renforts secs tels qu'une tresse, un tissu ou un multiaxial cousu.

Les demandes de brevet WO 2010/046609 et WO 2010/061114, auxquelles on pourra se référer pour plus de détails décrivent des types particuliers de rubans voilés de fibres de carbone qui permettent d'obtenir des matériaux intermédiaires selon l'invention qui vont permettre notamment de réaliser, ultérieurement, des pièces composites qui vont allier à la fois de bonnes propriétés mécaniques et un taux volumique de fibres élevé, propriétés recherchées notamment dans le domaine de l'aéronautique. Selon un mode de réalisation préféré, chaque ruban voilé constitutif du matériau intermédiaire selon l'invention est constitué d'une nappe unidirectionnelle de fibres de carbone présentant une masse surfacique de 100 à 280 g/m², associée, sur chacune de ses faces, à un non-tissé de fibres thermoplastiques, lesdits non-tissés présentant, chacun, une épaisseur de 0,5 à 50 microns, de préférence de 3 à 35 microns. Selon un mode de réalisation particulier, chaque ruban voilé présente une épaisseur de 80 à 380 microns, de préférence de 90 à 320 microns, et préférentiellement de 93 à 305 microns. Dans le cadre de la présente invention, les épaisseurs et les grammages sont, par exemple, déterminés selon les techniques décrites dans la demande de brevet WO 2010/046609.

De façon avantageuse, l'épaisseur de chaque ruban voilé présent au sein du produit intermédiaire selon l'invention présente une faible variabilité, notamment avec des variations d'épaisseurs n'excédant pas 20 µm en écart-type, de préférence n'excédant pas 10 µm en écart-type. Cette caractéristique permet d'améliorer la régularité des pièces composites qui peuvent être obtenues.

Par ailleurs, de façon avantageuse, la masse surfacique du voile présent au sein de chaque ruban voilé est comprise dans la gamme allant de 0,2 à 20 g/m².

Dans chaque ruban, l'association entre la nappe unidirectionnelle et les voiles peut être réalisée de manière discontinue, par exemple uniquement en certains points ou zones, mais est, de préférence, réalisée selon une liaison qualifiée de continue, qui s'étend sur la totalité de la surface de la nappe. L'association de la nappe unidirectionnelle aux deux voiles peut se faire par l'intermédiaire d'une couche adhésive, par exemple choisie parmi les adhésifs époxydes, adhésifs polyuréthane, les colles thermodurcissables, les adhésifs à base de monomère polymérisables, les adhésifs acryliques structuraux ou acryliques modifiés, les adhésifs hot-melt. Mais, le plus souvent l'association est réalisée grâce au caractère collant que présentent les voiles à chaud, par exemple lors d'une étape de thermocompression lors de leur conception qui permet d'assurer une liaison entre la nappe unidirectionnelle et les voiles. La liaison est donc le plus souvent, au moins en partie, assurée par fusion au moins partielle des fibres thermoplastiques des voiles, suivie d'un refroidissement. De manière préférée, la cohésion de chaque ruban voilé est assurée en l'absence de couture, tissage ou tricotage. Avantageusement, la liaison entre la nappe unidirectionnelle et les voiles est assurée exclusivement par les non-tissés thermoplastiques.

Selon un mode de réalisation particulier, chaque ruban voilé présente une largeur donnée sensiblement constante sur toute sa longueur, c'est-à-dire que les rubans voilés possèdent une très faible variabilité de largeur sur toute leur longueur. Dans ce cas, du fait de la largeur sensiblement constante des rubans voilés utilisés, les rubans voilés selon l'invention présentent également une très faible variabilité en termes de masse surfacique. En particulier, la largeur de chaque ruban voilé présente, sur toute la longueur dudit ruban, un écart type notamment inférieur à 0,25 mm, de préférence inférieur à 0,22 mm et préférentiellement inférieur ou égal à 0,20 mm. Une faible variabilité de largeur permet notamment de réaliser par la suite des pièces d'une grande régularité, avec des propriétés mécanique contrôlées. La largeur des rubans voilés et l'écart type peuvent être déterminés selon la méthode donnée dans la demande de brevet WO 2010/061114. Un tel ruban voilé de largeur sensiblement constante peut être obtenu selon le procédé décrit dans la demande de brevet WO 2010/061114, à laquelle on pourra se référer pour plus de détails.

Selon un mode de réalisation particulier, pouvant être combiné aux précédents, chaque ruban voilé ne présente pas de fibres coupées sur ses bords longitudinaux. Ceci rend l'utilisation de ces derniers beaucoup plus facile dans les procédés de dépose automatique. En effet, la présence de fibres ou filaments coupés en bord de ruban a pour inconvénient de créer des zones d'accumulation des fibres ou filaments à certains points le long du trajet du ruban dans les procédés cités, et de causer des arrêts machine pour cause de casse de fils ou de mauvaise qualité du renfort créé. Ces bords avec présence de filaments coupés sont également générateurs de fils s'enroulant sur eux même lors du dévidage de la bobine où se trouve enroulé le ruban, ce qui a pour conséquence également des casses de fils ou défauts de qualité (on parle alors de « bagues » créées sur la bobine de ruban). Une telle caractéristique est rendue possible, notamment grâce au procédé précédemment décrit dans la demande de brevet WO 2010/061114.

Aussi, selon un mode de réalisation particulier, pouvant être combiné aux précédents, chaque ruban voilé présente, en certains points seulement de ses bords longitudinaux ou sur toute la longueur de ses deux bords longitudinaux, une liaison directe entre les deux non-tissés, réalisée grâce au caractère thermoplastique de ces derniers.

Les matériaux intermédiaires selon l'invention peuvent être utilisés pour la réalisation de pièces aéronautiques qui demandent de hautes performances mécaniques, et notamment pour la réalisation de pièces de structure primaire, mais également pour la conception de pièces dans le domaine de l'automobile, des éoliennes, réservoir haute pression ou autres applications industrielles où les caractéristiques mécaniques n'ont pas la même importance mais où le produit intermédiaire selon l'invention va présenter un intérêt en termes de vitesse de diffusion de la résine injectée ou infusée ultérieurement. De telles pièces pourront être réalisées par tout procédé direct connu, tels que les procédés par infusion ou injection de résine thermodurcissables, voire thermoplastique. La matrice utilisée est, de préférence, de type thermodurcissable. La résine injectée sera, par exemple, choisie parmi les polymères thermodurcissables suivants : les époxydes, les polyesters insaturés, les vinylesters, les phénoliques, les polyimides, les bismaléimides. La pièce composite est obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous vide et plus forte dans le cas de l'injection dans un moule RTM.

Le matériau intermédiaire et le procédé selon l'invention permettent, dans certains cas, de réaliser des pièces composites présentant un TVF de l'ordre de 60%, qui correspond au taux standard pour les structures primaires en aéronautique (c'est-à-dire les pièces vitales pour l'appareil) et, également, d'améliorer fortement la résistance à l'impact à faible vitesse des pièces composites obtenues: par exemple, la chute d'un outil dans un atelier lors de la fabrication d'une structure composite, un choc avec un corps étranger lors de son utilisation en fonctionnement au sol.

La pression appliquée lors d'un procédé par injection est supérieure à celle utilisée lors d'un procédé par infusion. De plus, les procédés par injection utilisent généralement des moules fermés. Il en résulte qu'il est plus facile de réaliser des pièces avec un TVF correct avec un procédé d'injection que d'infusion. Les matériaux selon l'invention permettent d'atteindre le taux volumique de fibres souhaité, et notamment de l'ordre de 53 à 60%, même lorsque la pièce composite est réalisée avec une étape c) telle que mentionnée précédemment, qui met en oeuvre une infusion et non une injection de résine. Un tel mode de réalisation constitue d'ailleurs une variante avantageuse, notamment en termes de coût global de réalisation d'une pièce composite.

Les pièces composites susceptibles d'être obtenues selon le procédé de l'invention font également parties intégrantes de l'invention, en particulier, les pièces qui présentent un taux volumique de fibres de 50 à 63% et notamment de 53 à 60%.

Les exemples ci-après permettent d'illustrer l'invention, mais n'ont aucun caractère limitatif.

### EXEMPLES DE REALISATION

### Description des matériaux de départ:

Le matériau utilisé pour ces essais est le suivant :
Nappe de 3 fils carbone IMA 12K, 446Tex, de la société Hexcel, associé à un voile thermoplastique 128D06 de la société Protechnic de chaque coté.

La nappe est calibrée en largeur à 5,97mm (écart type : 0,16 mm) selon le procédé décrit dans la demande de brevet FR2939069 en utilisant les réglages suivants :

| Vitesse ligne (m/min) | T barre (°C) (9) | T barre (°C) (10) | T préchauffage voile (°C) (11a et 11b) | T barres (°C) (12a et 12b) |
|---|---|---|---|---|
| 1,3 | 257 | 257 | 160 | 180 |

Le grammage final du ruban obtenu est de 224 g/m².

### Procédé utilisé pour déposer les rubans:

Une dépose au contact, de façon automatique, ruban par ruban, a été effectuée, grâce à une tête qui garantit un maintien du fil pendant la dépose en éliminant tout mouvement latéral.

La tête d'application de fils de renfort sur une surface de dépose comporte :
- Une structure porteuse composée d'une plaque support délimitant de part et d'autre une face avant et une face arrière. Les organes moteurs sont portés par la face arrière qui est pourvue de passages pour les axes de transmission de manière que les organes fonctionnels se trouvent situés du côté de la face avant de la plaque support.
- Un dispositif de guidage jusqu'à la zone d'application, d'au moins un fil de renfort provenant d'un dispositif de stockage. Ce dispositif est porté par la face avant.
- Un organe applicateur de type roulette montée sur un dispositif de déplacement permettant d'appliquer une pression sur le fil de renfort en contact avec la surface de dépose.
- Un système de chauffe des fils de renfort au plus près de la zone d'application.
- Un mécanisme de coupe des fils de renfort en amont de la zone d'application sur la surface de dépose, ce mécanisme comportant au moins un organe de coupe et un organe moteur (de type rotatif) permettant de déplacer l'organe de coupe d'une part, selon une course aller pour permettre la coupe des fils de renfort et d'autre part, selon une course retour pour permettre le dégagement de l'organe de coupe par rapport au fils de renfort. Le mécanisme de coupe comporte une enclume sur laquelle l'organe de coupe assure la coupe des fils de renfort.
- Un système de réacheminement des fils de renfort après leur coupe, au moins jusqu'à la zone d'application, ce système de réacheminement comportant une motorisation (de type rotatif).
- Un mécanisme de serrage des fils de renfort commandé en déplacement par un organe moteur rotatif monté sur la face arrière de la plaque support.

Cette tête est montée sur un robot M16ib de la société FANUC, ledit robot ayant les capacités de précision et reproductibilité nécessaire à la dépose précise telle que décrite. Chaque ruban est déposé à plat, la dépose se faisant en chauffant le pli précédent à l'aide d'un pistolet air chaud de marque LEICESTER, modèle LE Mini Sensor en version 800W. Le débit d'entrée d'air est de 25 litres par minute, une fuite d'un débit de 11 litres par minute étant créé après la chauffe. La pression d'entrée est environ égale à 0,2 bar, et la vitesse de dépose est de 30mm/s. La distance entre la buse de sortie d'air chaud et le pli à chauffée est d'environ 5mm de telle sorte que la dépose se fait fumée, c'est-à-dire sans dégrader l'ensimage des fils de carbone de la nappe et du pli précédent et avec un collage satisfaisant. L'appui de la roulette de dépose sur la surface, qu'elle soit constituée par exemple d'un film plastique ou de bandes de carbone déjà déposées, constituant le pli précédent, se traduit par une force située dans la gamme 700cN à 900cN.

Le premier pli, de par l'absence de pli précédent, a été déposé de la même façon sans chauffe, les extrémités des rubans étant collées par un scotch double face en leur extrémité sur environ 20mm, la dépose étant toujours automatique.

8 plis ont été déposés pour chaque préforme selon un empilement quasi-isotrope (45°,0°, 135°, 90°, 90°, 135°, 0°, 45°).

Quatre préformes d'une taille de 305×305mm ont été réalisées. La première sans espace entre les rubans déposés, la deuxième avec un espace de 0,2mm entre deux rubans voisins déposés, la troisième avec un espace de 0,4mm entre deux rubans voisins déposés avec exacte superposition des rubans dans les deux plis orientés à 90° et la quatrième avec un espace de 0,4mm entre deux rubans voisins déposés avec un décalage d'une demi-largeur de ruban dans les deux plis orientés à 90°.

### Caractéristiques des préformes et/ou des pièces obtenues

Plusieurs préformes de 8 plis ont été réalisées, celles-ci ont subi les essais suivants :
- Pesée de la préforme de 8 plis pour en déterminer la masse par plis et ainsi calculer le Taux Volumique de Fibres (TVF) avant et après infusion et cuisson,
- Mesure d'épaisseur de la préforme sous 1mbar de pression résiduelle pour mesurer le TVF,
- Infusion avec la résine RTM6 d'Hexcel, suivie du cycle de cuisson préconisé par la fiche du produit, et mesure en épaisseur pour en déduire le TVF,
- Enregistrement de la quantité de résine entrant dans la préforme en fonction du temps,
- Mesure de la perméabilité transverse de chaque préforme selon la méthode décrite dans la demande de brevet WO 2010/046609. La perméabilité transverse peut se définir par l'aptitude qu'a un fluide à traverser un matériau fibreux dans le sens transverse donc hors du plan du renfort. Elle se mesure en m². Les valeurs données ci-dessus, ainsi que celles mentionnées dans les exemples qui suivent, sont mesurées avec l'appareillage et la technique de mesure décrite dans la Thèse intitulée « Problématique de la mesure de la perméabilité transverse de préformes fibreuses pour la fabrication de structures composites », par Romain Nunez, soutenue à l'Ecole Nationale Supérieure des Mines de Saint Etienne, le 16 Octobre 2009, à laquelle on pourra se référer pour plus de détails. La mesure est notamment réalisée avec un contrôle de l'épaisseur de l'échantillon pendant l'essai en utilisant deux chambres co-cylindriques permettant de réduire l'influence du « race-tracking » (passage du fluide à coté ou « sur le coté » du matériau dont la perméabilité est à mesurer). Le fluide utilisé est de l'eau et la pression est de 1 bar +/-0.01bar. Cet essai a nécessité la réalisation de trois préformes de chaque type.

| Exemple Espace entre fils | Taux volumique de fibre préforme sous pression réduite (4mBar résiduel) | Taux volumique de fibre panneaux infusé sous pression réduite | Masse surfacique finale par pli mesurée |
|---|---|---|---|
| **Ex. comparatif 1** | 59% | 60,70% | 226g/m² |
| Aucun | | | |
| **Ex.1** | 58% | 59,70% | 219g/m² |
| 0,2 mm avec plis à 90° successifs superposés sans décalage | | | |
| **Ex.2** | 53,50% | 58,70% | 209g/m² |
| 0,4mm avec plis successifs à 90° superposés sans décalage | | | |
| **Ex.3** | 56% | 59,1% | 209g/m² |
| 0,4mm avec plis successifs à 90° superposés avec décalage d'1/2 espace | | | |

Chaque pli individuel présente un facteur d'ouverture de 0,2x100/(5,98+0,2)=3,2% (Ex1) ; 0,4x100/(5,98+0,4)=6,3% (Ex2, Ex3), et 0% pour l'Exemple comparatif 1.

### Technique d'infusion

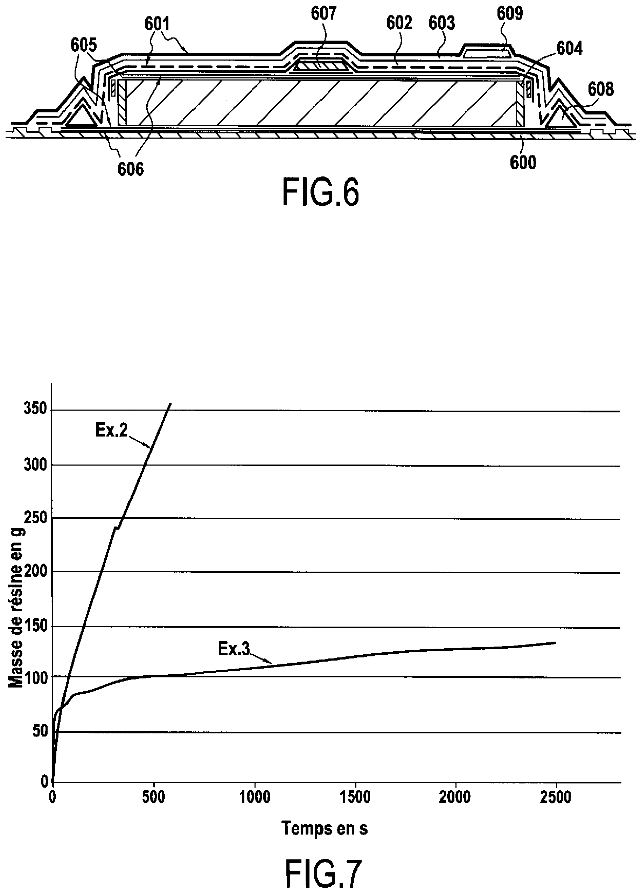

L'infusion de la résine est réalisée, en utilisant un dispositif tel que représenté **Figure 6**, dans laquelle les références suivantes sont utilisées :
**I** : préforme, **600** : plaque de fond métallique, **601** : sac à vide, **602** : membrane semi-perméable, **603 :** non-tissé, **604 :** scotch, **605 :** tissu d'arrachage, **606** : matériau de diffusion, **607** : entrée résine, **608** : sortie résine sortie vide, **609** : prise de vide.

### Procédure d'infusion :

- Préparer le sac à vide en prenant soin de sceller les bords de la préforme pour garantir une infusion transverse pure,
- Chauffer l'ensemble à 100°C dans une enceinte,
- Appliquer le vide maximum (1mbar résiduel) sur les sorties de vide et dans le sac à vide,
- Ouvrir l'entrée de résine préalablement chauffée à 80°C,
- Lorsque la préforme est remplie de résine, fermer l'arrivée et la sortie de la résine en laissant le vide sur la prise de vide au-dessus de la membrane
- Monter la température à 180°C,
- Maintenir le vide maximum (1mbar résiduel) dans le sac à vide,
- Attendre la fin de la cuisson et démouler la pièce.

### Exemple de remplissage des préformes pendant l'infusion

Le graphe présenté **Figure 7** montre que :
- La préforme dans laquelle les rubans superposés des deux plis successifs dans la même orientation à 90° sont parfaitement alignés sans décalage laisse rentrer très facilement le résine en fonction du temps.
- La préforme dans laquelle les rubans superposés des deux plis successifs dans la même orientation à 90° sont décalés d'une demi largeur de ruban ne laisse rentrer que très peu de résine en fonction du temps. Ceci s'explique par le fait que les canaux créés par les espaces entre rubans sont bouchés et ne permettent donc plus à la résine de s'écouler entre les plis.

### Mesures de perméabilité

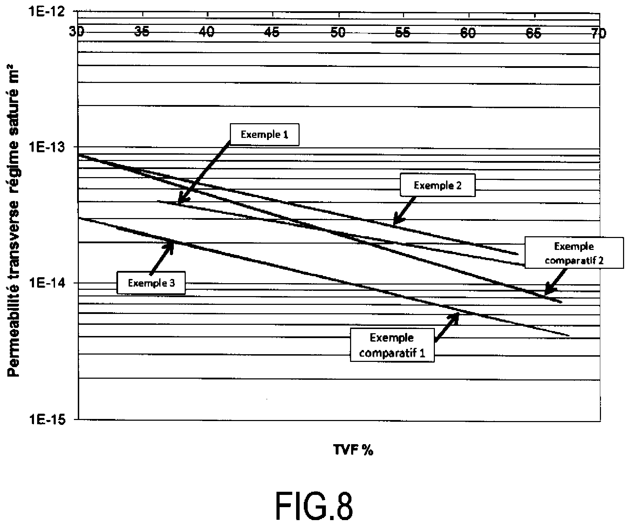

Sur la **Figure 8****,** chaque courbe est la moyenne de trois mesures. Chaque mesure a été faite sur une préforme une seule fois.

Les résultats présentés **Figure 8** montrent que les préformes réalisées par déposes successives de rubans espacés avec des espaces entre rubans de 0,4 et 0,2mm pour des nappes de 5,97mm de 226g/m² sont plus perméables qu'un tissu Sergé 2/2 de 300g/m² considéré comme la référence dans la gamme 55-60% de TVF (**Exemple comparatif 2**). Dans cet exemple, une préforme de quatre plis de tissu 48302 (référence Hexcel) a été drapée en empilement 0/90, 45/135, 0/90, 45/135. Par contre, la perméabilité d'une préforme dans laquelle les rubans superposés des deux plis successifs dans la même orientation à 90° sont décalés d'une demi largeur de ruban est identique à la perméabilité d'une préforme réalisée sans espace entre rubans voilés.

## Revendications

1. Matériau intermédiaire comprenant, voire constitué exclusivement, d'un ensemble de rubans individualisés, chaque ruban (I,100,101...,200,201...,300,301...) étant composé d'une nappe de fibres de renfort unidirectionnelles associée, par collage, sur chacune de ses faces à un voile (2a,2b) de fibres thermoplastiques, **caractérisé en ce que** les rubans (I,100,101...,200,201...,300,301...) sont disposés en couches successives (10,20,30...), de manière à ce que les rubans (I,100,101...,200,201...,300,301...) de deux couches successives se superposent avec ou sans croisement mais sans entrelacement, la liaison entre un ruban et le ou les rubans avec lequel il est superposé étant assurée, par collage et **en ce que** dans chaque couché (10,20,30...), les rubans (I,100,101...,200,201...,300,301...) sont disposés sensiblement parallèlement les uns aux autres au moins sur la majeure partie de leur longueur, tout en étant indépendants et espacés les uns des autres et **en ce que** les rubans d'au moins deux couches s'étendent selon deux directions différentes.

2. Matériau intermédiaire selon la revendication 1 **caractérisé en ce que** les rubans de deux couches successives sont disposés de manière à ce qu'il n'y ait pas total recouvrement des espaces entre rubans d'une des couches par les rubans de l'autre couche.

3. Matériau intermédiaire selon la revendication 1 ou 2 **caractérisé en ce que** chaque couche (10,20,30) de rubans (I,100,101...,200,201...,300,301...) présente un facteur d'ouverture appartenant à la gamme allant de 0,5 à 9%, de préférence à la gamme allant de 3 à 6%.

4. Matériau intermédiaire selon la revendication précédentes **caractérisé en ce que**, dans les zones de parallélisme, l'espacement entre deux rubans voisins au sein d'une couche est au plus de 0,4mm.

5. Matériau intermédiaire selon l'une des revendications précédentes **caractérisé en ce que**, dans chaque couche (10,20,30...), le rapport largeur de ruban/espacement entre deux rubans voisins appartient à la gamme allant de 7 à 150, préférentiellement à la gamme allant de 15 à 40.

6. Matériau intermédiaire selon l'une des revendications précédentes **caractérisé en ce qu'**il comporte des couches successives dans lesquelles les rubans sont orientés dans des directions identiques et **en ce qu'**il y a parfaite ou quasi-parfaite superposition des rubans des couches dans lesquelles les rubans sont orientés dans des directions identiques.

7. Matériau intermédiaire selon l'une des revendications précédentes **caractérisé en ce que** chaque ruban (I,100,101...,200,201...,300,301...) présente une largeur quasi-constante, avec un écart type sur toute sa longueur inférieur à 0,25 mm, de préférence inférieur à 0,22 mm, et préférentiellement à 0,20 mm.

8. Matériau intermédiaire selon l'une des revendications précédentes **caractérisé en ce que** la masse totale de liant polymérique représente de 0,1 à 10 % et, de préférence, de 3 à 10 % de la masse totale du matériau.

9. Matériau intermédiaire selon l'une des revendications précédentes **caractérisé en ce que** les fibres de renfort sont en un matériau choisi parmi les matériaux suivants : carbone, verre, aramide, silice, céramique et leurs mélanges.

10. Matériau intermédiaire selon l'une des revendications précédentes **caractérisé en ce que** la cohésion de chaque ruban (I,100,101...,200,201...,300,301...) individualisé est assurée en l'absence de couture, tissage ou tricotage.

11. Matériau intermédiaire selon l'une des revendications précédentes **caractérisé en ce que** les voiles (2a,2b), au sein de chaque ruban(I,100,101...,200,201...,300,301...), ont une masse surfacique comprise dans la gamme allant de 0,2 à 20 g/m².

12. Matériau intermédiaire selon l'une des revendications précédentes **caractérisé en ce que** les fibres thermoplastiques sont en un matériau choisi parmi les polyamides (PA, par exemple, les PA6, PA12, PA11, PA6,6, PA 6,10, PA 6,12), copolyamides (CoPA), les polyamides - block ether ou ester (PEBAX, PEBA), polyphtalamide (PPA), les polyesters (par exemple, le Polyéthylène téréphtalate -PET-, le Polybutylène téréphtalate - PBT), les copolyesters (CoPE), les polyuréthanes thermoplastiques (TPU), les polyacétales (POM), les polyoléfines en C2-C8 (par exemple, les polypropylènes - PP, les polyéthylènes haute densité - HDPE, les polyéthylènes basse densité - LDPE, les polyéthylènes basse densité linéaire - LLDPE...) et/ou les copolymères de ces derniers, polyéthersulfones (PES), les polysulfones (PSU...), les polyphénylènes sulfones (PPSU...), PolyétherétherCétones (PEEK), polyéthercétonecétone (PEKK), poly(sulfure de phénylène) (PPS), ou polyétherimides (PEI), les polyimides thermoplastiques, les polymères à cristaux liquides (LCP), les phénoxys, les copolymères à blocs tels que les copolymères Styrène-Butadiene-méthylméthacrylate (SBM), les copolymères méthylméthacrylate-acrylate de butyl-méthylméthacrylate (MAM) et leurs mélanges.

13. Matériau intermédiaire selon l'une des revendications précédentes **caractérisé en ce que** chaque ruban (I,100,101...,200,201...,300,301...) est constitué d'une nappe unidirectionnelle de fibres de carbone présentant une masse surfacique de 100 à 280 g/m², associée, sur chacune de ses faces, à un voile (2a,2b) de fibres thermoplastiques, lesdits voiles présentant, chacun, une épaisseur de 0,5 à 50 microns, de préférence de 3 à 35 microns.

14. Procédé de fabrication d'une pièce composite **caractérisé en ce qu'**il comporte les étapes suivantes :
a) disposer d'au moins un matériau selon l'une des revendications 1 à 13,
b) éventuellement empiler différents matériaux selon l'une des revendications précédentes et éventuellement les solidariser sous la forme d'une préforme,
c) ajouter une résine thermodurcissable et/ou thermoplastique, par injection, ou de préférence, par infusion préférentiellement sous pression réduite, notamment sous une pression inférieure à la pression atmosphérique, notamment inférieure à 1 bar et de préférence comprise entre 0,1 et 1 bar,
d) consolider la pièce souhaitée par une étape de polymérisation/réticulation suivant un cycle défini en température et sous pression, suivi d'un refroidissement.

15. Pièce composite obtenue selon le procédé de la revendication 14 présentant, de préférence, un taux volumique de fibres de 50 à 63%, de préférence de 53 à 60%.

## Patentansprüche

1. Zwischenmaterial, umfassend einen bzw. ausschließlich bestehend aus einem Satz von einzelnen Bändern, wobei jedes Band (I, 100, 101 ..., 200, 201 ..., 300, 301 ...) aus einer Lage unidirektionaler Verstärkungsfasern besteht, die auf jeder ihrer Seiten mit einer Bahn (2a, 2b) aus thermoplastischen Fasern durch Verkleben verbunden sind, **dadurch gekennzeichnet, dass** die Bänder (I, 100, 101 ..., 200, 201 ..., 300, 301 ...) in aufeinanderfolgenden Schichten (10, 20, 30 ...) angeordnet sind, so dass sich die Bänder (I, 100, 101 ..., 200, 201 .... 300, 301 ...) von zwei aufeinanderfolgenden Schichten mit oder ohne Kreuzung, aber ohne Verschlingung überlappen, wobei die Verbindung zwischen einem Band und dem oder den Bändern, mit denen es sich überlappt, durch Kleben gewährleistet ist, und dass in jeder Schicht (10, 20, 30 ....) die Bänder (I, 100, 101 ..., 200, 201 ..., 300, 301 ...) über mindestens den größten Teil ihrer Länge im Wesentlichen parallel zueinander angeordnet sind, wobei sie unabhängig und voneinander beabstandet sind, und dass sich die Bänder von mindestens zwei Schichten in zwei verschiedene Richtungen erstrecken.

2. Zwischenmaterial gemäß Anspruch 1, **dadurch gekennzeichnet, dass** die Bänder zweier aufeinander folgender Schichten so angeordnet sind, dass keine vollständige Abdeckung der Zwischenräume zwischen den Bändern einer der Schichten durch die Bänder der anderen Schicht erfolgt.

3. Zwischenmaterial gemäß Anspruch 1 oder 2, **dadurch gekennzeichnet, dass** jede Schicht (10, 20, 30 ...) der Bänder (I, 100, 101 ..., 200, 201 ..., 300, 301 ...) einen Öffnungsfaktor im Bereich von 0,5 bis 9 %, bevorzugt im Bereich von 3 bis 6 %, aufweist.

4. Zwischenmaterial gemäß dem vorangehenden Anspruch, **dadurch gekennzeichnet, dass** in den parallelen Bereichen der Abstand zwischen zwei benachbarten Bändern innerhalb einer Schicht höchstens 0,4 mm beträgt.

5. Zwischenmaterial gemäß einem der vorangehenden Ansprüche, **dadurch gekennzeichnet, dass** in jeder Schicht (10, 20, 30 ...) das Verhältnis Breite des Bandes / Abstand zwischen zwei benachbarten Bändern in dem Bereich von 7 bis 150, bevorzugt in dem Bereich von 15 bis 40 liegt.

6. Zwischenmaterial gemäß einem der vorangehenden Ansprüche, **dadurch gekennzeichnet, dass** es aufeinander folgende Schichten umfasst, in denen die Bänder in identischen Richtungen ausgerichtet sind, und dass es eine vollkommene oder nahezu vollkommene Überlagerung der Bänder der Schichten gibt, in denen die Bänder in identischen Richtungen ausgerichtet sind.

7. Zwischenmaterial gemäß einem der vorangehenden Ansprüche, **dadurch gekennzeichnet, dass** jedes Band (I, 100, 101 ..., 200, 201 ..., 300, 301 ...) eine nahezu konstante Breite mit einer Standardabweichung über seine gesamte Länge von weniger als 0,25 mm, bevorzugt weniger als 0,22 mm, und noch bevorzugter weniger als 0,20 mm aufweist.

8. Zwischenmaterial gemäß einem der vorangehenden Ansprüche, **dadurch gekennzeichnet, dass** die Gesamtmasse des polymeren Bindemittels 0,1 bis 10 % und bevorzugt 3 bis 10 % der Gesamtmasse des Materials ausmacht.

9. Zwischenmaterial gemäß einem der vorangehenden Ansprüche, **dadurch gekennzeichnet, dass** die Verstärkungsfasern aus einem Material hergestellt sind, das unter den folgenden Materialien ausgewählt ist: Kohlenstoff, Glas, Aramid, Siliciumdioxid, Keramik und Mischungen davon.

10. Zwischenmaterial gemäß einem der vorangehenden Ansprüche, **dadurch gekennzeichnet, dass** der Zusammenhalt jedes einzelnen Bandes (I, 100, 101 ..., 200, 201 ..., 300, 301 ...) ohne Nähen, Weben oder Stricken gewährleistet ist.

11. Zwischenmaterial gemäß einem der vorangehenden Ansprüche, **dadurch gekennzeichnet, dass** die Bahnen (2a, 2b) innerhalb eines jeden Bandes (I, 100, 101 ..., 200, 201 ..., 300, 301 ...) eine Oberflächenmasse im Bereich von 0,2 bis 20 g/m² aufweisen.

12. Zwischenmaterial gemäß einem der vorangehenden Ansprüche, **dadurch gekennzeichnet, dass** die thermoplastischen Fasern aus einem Material bestehen, das ausgewählt ist aus Polyamiden (PA, zum Beispiel PA6, PA12, PA11, PA6,6, PA6,10, PA6,12), Copolyamiden (CoPA), Polyester- oder -ether-Blockamiden (PEBAX, PEBA), Polyphtalamid (PPA), Polyestern (zum Beispiel Polyethylenterephthalat -PET-, Polybutylenterephthalat - PBT), Copolyestern (CoPE), thermoplastischen Polyurethanen (TPU), Polyacetalen (POM), C2-C8-Polyolefinen (zum Beispiel Polypropylene - PP, hochdichte Polyethylene - HDPE, niedrigdichte Polyethylene - LDPE, lineare niedrigdichte Polyethylene - LLDPE ...) und/oder deren Copolymeren, Polyethersulfonen (PES), Polysulfonen (PSU ...), Polyphenylensulfonen (PPSU ...), Polyetheretherketonen (PEEK), Polyetherketonketonen (PEKK), Poly(phenylensulfid) (PPS) oder Polyetherimiden (PEI), thermoplastischen Polyimiden, Flüssigkristallpolymeren (LCP), Phenoxiden, Blockcopolymeren wie Styrol-Butadien-Methylmethacrylat (SBM)-Copolymeren, Methylmethacrylat-Acrylat-Copolymeren von Butyl-Methylmethacrylat (MMA) und deren Mischungen.

13. Zwischenmaterial gemäß einem der vorangehenden Ansprüche, **dadurch gekennzeichnet, dass** jedes Band (I, 100, 101 ..., 200, 201 ..., 300, 301 ...) aus einer unidirektionalen Lage von Kohlenstoffasern mit einer Oberflächenmasse von 100 bis 280 g/m², die auf jeder ihrer Seiten mit einer Bahn (2a, 2b) aus thermoplastischen Fasern verbunden ist, wobei die Bahnen jeweils eine Dicke von 0,5 bis 50 Mikrometern, bevorzugt 3 bis 35 Mikrometern aufweisen.

14. Verfahren zur Herstellung eines Verbundteils, **dadurch gekennzeichnet, dass** es die folgenden Schritte aufweist:
a) Bereitstellen von mindestens einem Material gemäß einem der Ansprüche 1 bis 13,
b) gegebenenfalls Schichten verschiedener Materialien gemäß einem der vorangehenden Ansprüche und gegebenenfalls Verfestigen in Gestalt einer Vorform,
c) Hinzufügen eines duroplastischen und/oder thermoplastischen Harzes durch Injektion oder bevorzugt durch Infusion noch bevorzugter unter vermindertem Druck, insbesondere unter einem niedrigeren Druck als dem Atmosphärendruck, insbesondere unterhalb von 1 bar und bevorzugt zwischen 0,1 und 1 bar,
d) Verfestigen des gewünschten Teils durch einen Schritt der Polymerisation/Vernetzung nach einem definierten Temperaturzyklus und unter Druck mit anschließender Abkühlung.

15. Verbundteil, erhalten gemäß dem Verfahren von Anspruch 14, bevorzugt mit einem Faservolumengehalt von 50 bis 63 %, noch bevorzugter von 53 bis 60 %.

## Claims

1. An intermediate material comprising, or even constituted exclusively, by an array of individualised ribbons, each ribbon (I, 100, 101..., 200, 201...300, 301...) being composed by a tape of unidirectional reinforcing fibres associated by adhesion on each of its faces with a veil (2a, 2b) of thermoplastic fibres, **characterised in that** the ribbons (I, 100, 101..., 200, 201...300, 301...) are disposed in successive layers (10, 20, 30...), in such a way that the ribbons (I, 100, 101..., 200, 201...300, 301...) of two successive layers are superposed with or without crossing but without interlacement, the bond between a ribbon and the ribbon or ribbons with which it is superposed being ensured by adhesion, and **in that** in each layer (10, 20, 30...) the ribbons (I, 100, 101..., 200, 201...300, 301...) are disposed substantially parallel to each other at least on the major part of their length, while being independent and spaced apart from each other and **in that** the ribbons of at least two layers extend in two different directions.

2. The intermediate material as claimed in Claim 1, **characterised in that** the ribbons of two successive layers are disposed so that there is not total coverage of the spaces between ribbons of one of the layers by the ribbons of the other layer.

3. The intermediate material as claimed in Claim 1 or 2, **characterised in that** each layer (10, 20, 30...) of ribbons (I, 100, 101..., 200, 201...300, 301...) has an opening factor belonging to the range going from 0.5 à 9%, preferably to the range going from 3 to 6%.

4. The intermediate material as claimed in the preceding claims,, **characterised in that** in the parallelism zones the spacing between two adjacent ribbons within a layer is at most 0.4 mm.

5. The intermediate material as claimed in any one of the preceding claims, **characterised in that** in each layer (10, 20, 30...) ratio the width of ribbon/spacing between two adjacent ribbons belongs to the range going from 7 to 150, preferentially to the range going from 15 to 40.

6. The intermediate material as claimed in any one of the preceding claims, **characterised in that** it comprises successive layers in which the ribbons are oriented in identical directions and **in that** there is perfect or quasi-perfect superposition of the ribbons of layers in which the ribbons are oriented in identical directions.

7. The intermediate material as claimed in any one of the preceding claims, **characterised in that** each ribbon (I, 100, 101..., 200, 201...300, 301...) has a quasi-constant width, with a standard deviation over its entire length less than 0.25 mm, preferably less than 0.22 mm, and preferentially than 0.20 mm.

8. The intermediate material as claimed in any one of the preceding claims, **characterised in that** the total mass of polymeric binder represents from 0.1 to 10% and preferably from 3 to 10% of the total mass of the material.

9. The intermediate material as claimed in any one of the preceding claims, **characterised in that** the reinforcing fibres are made of a material selected from the following materials: carbon, glass, aramid, silica, ceramic and their mixtures.

10. The intermediate material as claimed in any one of the preceding claims, **characterised in that** the cohesion of each individualised ribbon (I, 100, 101..., 200, 201...300, 301...) is ensured in the absence of sewing, weaving or knitting.

11. The intermediate material as claimed in any one of the preceding claims, **characterised in that** the veils (2a, 2b) within each ribbon (I, 100, 101..., 200, 201...300, 301...) have a surface mass in the range going from 0.2 to 20 g/m².

12. The intermediate material as claimed in any one of the preceding claims, **characterised in that** thermoplastic fibres are made of a material selected from polyamides (PA, for example, PA6, PA12, PA11, PA6,6, PA 6,10, PA 6,12), copolyamides (CoPA), polyamides - block ether or ester (PEBAX, PEBA), polyphthalamide (PPA), polyesters (for example, Polyethylene terephthalate -PET-, Polybutylene terephthalate - PBT), copolyesters (CoPE), thermoplastic polyurethanes (TPU), polyacetals (POM), polyolefins in C2-C8 (for example, polypropylenes - PP, high-density polyethylenes - HDPE, low-density polyethylenes - LDPE, low-density linear polyethylenes -LLDPE...) and/or copolymers of the latter, polyethersulfones (PES), polysulfones (PSU...), polyphenylenes sulfones (PPSU...), Polyetheretherketones (PEEK), polyethercetonecetone (PEKK), poly(phenylene sulfide) (PPS), or polyetherimides (PEI), thermoplastic polyimides, liquid crystal polymers (LCP), phenoxys, block copolymers such as Styrene-Butadiene-methylmethacrylate copolymers (SBM), butyl-methylmethacrylate methylmethacrylate-acrylate copolymers (MAM) and their mixtures.

13. The intermediate material as claimed in any one of the preceding claims, **characterised in that** each ribbon (I, 100, 101..., 200, 201...300, 301...) is constituted by a unidirectional tape of carbon fibres having a surface mass of 100 to 280 g/m2, associated on each of its faces with a veil (2a, 2b) of thermoplastic fibres, said veils each having a thickness of 0.5 to 50 microns, preferably of 3 to 35 microns.

14. A manufacturing process of a composite piece, **characterised in that** it comprises the following steps:
a) having at least one material as claimed in any one of Claims 1 to 13,
b) optionally stacking different materials as claimed in any one of the preceding claims and optionally solidifying them in the form of a preform,
c) adding, a thermosetting and/or thermoplastic resin, by injection or preferentially by infusion, preferably, under reduced pressure, especially under pressure less than the atmospheric pressure, especially less than 1 bar and preferably between 0.1 and 1 bar,
d) consolidating the preferred piece by a polymerisation / reticulation step following a cycle defined in temperature and under pressure, followed by cooling.

15. A composite piece obtained according to the process of Claim 13, having, preferably, a volume rate of fibres of 50 to 63%, preferably of 53 to 60%.
